# EUROPÄISCHE PATENTSCHRIFT

(11) **EP 1 057 391 B1**
(45) Veröffentlichungstag und Bekanntmachung des Hinweises auf die Patenterteilung: **21.04.2004**
(21) Anmeldenummer: 00111622.7
(22) Anmeldetag: 31.05.2000
(51) Int. Cl.: A01B 15/16, A01B 71/02

(54) **Landwirtschaftliches Arbeitsgerät mit Abstreifer**
Agricultural working implement with scraper
Outil de travail agricole avec grattoirs

(30) Priorität: 03.06.1999 US 325481
(43) Veröffentlichungstag der Anmeldung: 06.12.2000
(73) Patentinhaber: DEERE & COMPANY, Moline, Illinois 61265-8098 (US)
(72) Erfinder: Hook, Richard Wayne, West Des Moines, IA 50265 (US); Zaun, Richard David, West Des Moines, IA 50265 (US); Goins, Garrett Lee, Ankeny, IA 50234 (US)
(74) Vertreter: Holst, Sönke, Dr.

(56) Entgegenhaltungen:
- DE-A- 3 626 271
- FR-A- 2 371 130
- US-A- 1 534 489
- US-A- 1 648 381
- US-A- 2 353 790

## Beschreibung

Die Erfindung betrifft ein landwirtschaftliches Arbeitsgerät mit wenigstens einer drehbaren, relativ zu einem Rahmen des Arbeitsgeräts sowohl in seitlicher als auch in vertikaler Richtung beweglich gelagerten Scheibe, die zum Bearbeiten des Erdbodens und zum Zerkleinern von Unrat eingerichtet ist und einem der Scheibe zugeordneten Abstreifer.

Typischerweise weisen Scheibeneggen einen Hauptrahmen mit mehreren Scheibenlagerungszusammenbauten auf, die in einem begrenzten Bereich relativ zueinander und zum Hauptrahmen flexibel aufgehängt sind. Jeder Scheibenlagerungszusammenbau umfasst eine Vielzahl gleich beabstandeter Scheiben, die auf einer Achse um diese gemeinsame Achse drehbar angebracht sind. Die Achse wird an gegenüberliegenden Enden durch C-förmige Federelemente abgestützt, um es den Scheiben zu ermöglichen, sich den Konturen der Landschaft folgend flexibel zu bewegen, wenn das Arbeitsgerät durch einen Traktor gezogen wird. Abhängig von Boden- und Vegetationsbedingungen wird eine Ansammlung von Erdreich und Unrat, z. B. Pflanzenreste, an den Scheiben festkleben und den Betrieb der Scheiben nachteilig beeinflussen. Um die Ansammlung von Erdreich und Unrat zu entfernen, wird ein Abstreifer, der häufig am Hauptrahmen befestigt ist, durch eine Feder vorgespannt und gegen die Oberfläche der Scheibe gedrückt. Wenn sich die Scheibe dreht, entfernt der Abstreifer kontinuierlich die Bodenund Unrat-Ansammlungen.

Während des Betriebs im Feld bewegen sich die Scheibenlagerungszusammenbauten mit Änderungen der Bodenkonturen mit und schwingen seitlich, wenn unterschiedliche Böden auf die Oberflächen der Scheiben wirken. Wenn die seitlichen Schwingungen auftreten, bedingt der Lagerungszusammenbau der Scheiben, dass sich der Druck der Abstreifer gegen die Scheiben vergrößert oder vermindert, entsprechend der Größe und Richtung der Schwingung. Da die Abstreifer und die Mittel zum Vorspannen (Federn) an Hauptrahmen aufgehängt sind, und sich die Scheibenlagerungszusammenbauten relativ zum dem Hauptrahmen bewegen, kann der Druck der Abstreifer beträchtlich variieren. Wenn die Scheiben sich seitlich vom Abstreifer fortbewegen, ist die Vorspannkraft der Feder reduziert, was eine nicht gereinigte Oberfläche zur Folge hat. Wenn sich die Scheibe seitlich in die entgegengesetzte Richtung bewegt, wirkt eine übermäßige Kraft auf die Oberfläche der Scheibe. Die Kraft ist in der Regel größer als zum Sauberstreifen der Scheibe nötig und hat übermäßige Abnutzung und zusätzliche Zugkraftanforderungen zur Folge. Außerdem ist der bevorzugte Ausrichtungswinkel zwischen Abstreifer und Scheibe nicht aufrechterhalten, wenn sich die Scheibenlagerungszusammenbauten seitlich von den Abstreifern fort oder zu ihnen hin verschieben.

Versuche, die mit den Abstreifern verbundenen Probleme zu überwinden, umfassen eine Befestigung der Abstreifer direkt an den Scheibenlagerungszusammenbauten, so dass sich die Abstreifer mit letzteren bewegen. Eine derartige Anordnung erfordert jedoch Befestigungsklammern und Verbindungen zwischen den Abstreifern und den Scheibenlagerungszusammenbauten, so dass der Fluss des Erdreichs und des Unrats gestört wird, und zusätzliche Oberflächen bereitgestellt werden, an denen sich Material ansammeln kann. Außerdem erfordert bei derzeitigen Abstreiferkonstruktionen eine Änderung der Vorspannung des Abstreifers einen Wechsel der Federn oder eine Vergrößerung oder Verminderung der Anzahl der Federn. Diese Änderungen können sehr zeitaufwändig sein und erfordern zusätzliche Teile und Kosten.

In der DE 36 26 271 A ist eine landwirtschaftliche Bodenwalze mit einem Abstreifer beschrieben, der mittels eines Antriebs von der Mantelfläche der Walze abgehoben und mit einer Hackbewegung zur Anlage an die Mantelfläche der Walze gebracht werden kann. Bei dieser Walze bestehen, anders als bei den Arbeitsgeräten mit beweglichen Scheiben, keine Schwierigkeiten, den Abstreifer anzubringen.

Die der Erfindung zugrunde liegende Aufgabe wird darin gesehen, ein verbessertes Abstreifersystem bereitzustellen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Es wird vorgeschlagen, den Abstreifer mittels eines Motors gegen die Scheibe zu drücken, die relativ zu einem Rahmen des Arbeitsgeräts sowohl in seitlicher als auch in vertikaler Richtung beweglich gelagert ist. Der vom Motor auf den Abstreifer übertragene Druck ist mittels einer geeigneten Steuerung einstellbar, um die vom Abstreifer ausgeübte Andrückkraft den jeweiligen Bedingungen anpassen zu können.

Auf diese Weise erhält man ein Abstreifersystem, das eine konstante Vorspannung des Abstreifers gewährleistet, sogar dann, wenn sich die Scheibe relativ zum Rahmen des Arbeitsgeräts bewegt, z. B. bei sich ändernden Bodenkonturen oder Boden- oder Unratbedingungen. Die Vorspannung des Abstreifers ist den jeweiligen Bedingungen entsprechend ohne Federwechsel oder zeitaufwändige Einstellungen leicht einstellbar, auch während des Arbeitsvorgangs. Federn zur Erzeugung der Vorspannung des Abstreifers erübrigen sich, und es ist auch nicht nötig, die Abstreifer direkt an den Scheibenlagerungszusammenbauten aufzuhängen. Dadurch erübrigen sich Befestigungselemente, die anderenfalls zusätzliche Oberflächen bilden würden, die den Fluss von Erdreich und Resten behindern und an denen sich Schmutz und Verunreinigungen ansammeln würden. Das Abstreifersystem ist einfach im Aufbau und leicht anzubringen und einzustellen.

Vorzugsweise sind an einem Rahmen mehrere Scheiben drehbar gelagert, denen jeweils ein Abstreifer zugeordnet ist. Es bietet sich aus Kostengründen an, für diese Scheiben nur einen gemeinsamen Motor vorzusehen.

Ein erfindungsgemäßes Arbeitsgerät umfasst vorzugsweise ein rohrförmiges Element als Träger für die Abstreifer, das verschiebbar am Rahmen des Arbeitsgeräts in der Nähe eines Scheibenlagerungszusammenbaus mit einer Vielzahl von Scheiben abgestützt ist. Der Motor verschiebt das Element relativ zum Rahmen des Arbeitsgeräts. Das rohrförmige Element kann in einer mit dem Rahmen verbundenen Klammer verschiebbar gelagert sein. Abstreifer sind am Träger befestigt, erstrecken sich bis zur Oberfläche der Scheiben und streifen Unrat und Verunreinigungen von ihnen ab. Die Verschiebung des Abstreifers erfolgt in der Regel in eine parallel zur Drehachse der Scheiben verlaufende Richtung.

Die Steuerung des Motors ist vorzugsweise fernsteuerbar. Dazu kann insbesondere ein hydraulisch betriebener Motor Verwendung finden, vorzugsweise ein Hydraulikzylinder. Letzterer kann zwischen dem Rahmen des Arbeitsgeräts und dem Träger des Abstreifers (also insbesondere dem rohrförmigen Element) vorgesehen sein. Der Hydraulikzylinder ist durch eine Drucksteuerung, vorzugsweise einen Druckregelventilzusammenbau, mit einer Quelle unter Druck stehenden Fluids verbunden, um das Element vorzuspannen, so dass die Abstreifer gegen die Scheiben gedrückt werden. Der Druckregelventilzusammenbau ist einstellbar, um den Druck der Abstreifer bei sich ändernden Bedingungen aus der Entfernung, beispielsweise aus einer Bedienerkabine, einstellen zu können.

Dieses Druckeinstellsystem hält eine voreingestellte Abstreifervorspannung aufrecht, die unabhängig von einer Relativbewegung zwischen dem Rahmen und dem Scheibenlagerungszusammenbau ist, die beispielsweise von der Art sein kann, die gewöhnlich auftritt, wenn ein mit einer C-förmigen Feder abgestützter Scheibenlagerungszusammenbau sich vertikal und seitlich relativ zum Rahmen bewegt. Der konstante Druck der Abstreifer ist gewährleistet, sogar wenn eine beträchtliche Relativbewegung zwischen dem Scheibenlagerungszusammenbau und dem Rahmen des Arbeitsgeräts auftritt.

In den Zeichnungen ist ein nachfolgend näher beschriebenes Ausführungsbeispiel der Erfindung dargestellt. Es zeigt:
- Fig. 1: eine rückseitige perspektivische Ansicht eines Teils einer Scheibenegge mit einem daran angebrachten Abstreifersystem;
- Fig. 2: eine vergrößerte Seitenansicht des in Figur 1 gezeigten Teils der Scheibenegge;

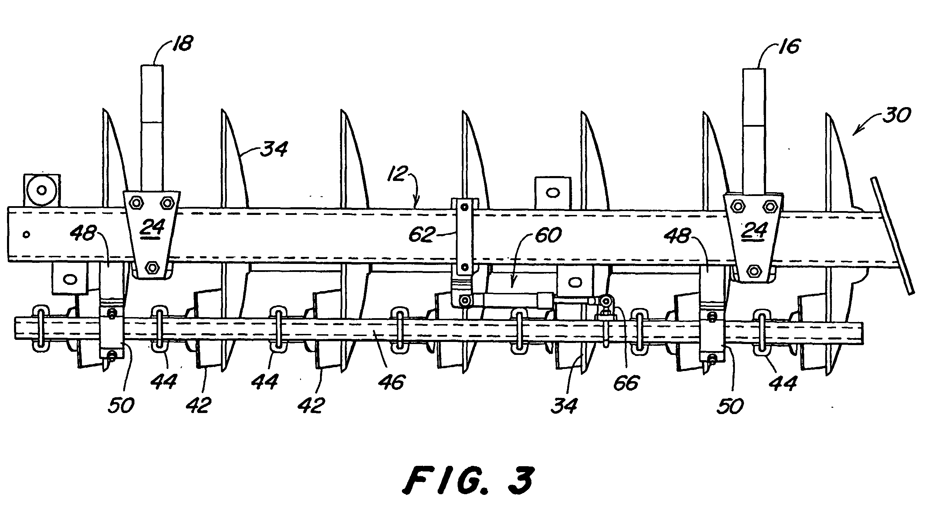

- Fig. 3: eine Draufsicht auf den in Figur 1 gezeigten Teil der Scheibenegge; und
- Fig. 4: ein Schema des hydraulischen Steuersystems des Abstreifersystems.

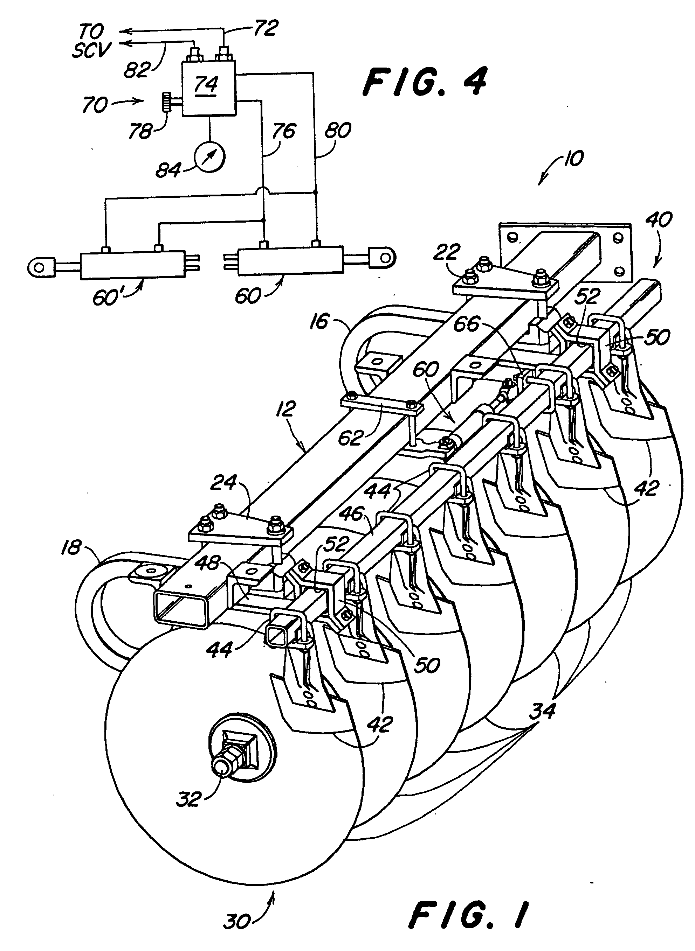

In Figur 1 ist ein Teil einer Scheibenegge 10 dargestellt, die einen aus Rohren aufgebauten Rahmen 12 aufweist, der zur Vorwärtsbewegung über einen Boden eingerichtet ist, auf dem Pflanzenreste oder anderer Unrat vorhanden ist. C-förmige Federn 16 und 18 sind durch Klammern 22 und 24 mit dem Rahmen 12 verbunden und haltern einen Scheibenlagerungszusammenbau 30 am Rahmen 12. Der Scheibenlagerungszusammenbau 30 umfasst eine Achse 32, die sich im wesentlichen parallel zum Rahmen 12 erstreckt und eine Vielzahl in Querrichtung beabstandeter Scheiben 34 oder Schneiden, die gemeinsam um die Achse 32 drehbar sind. Wenn der Scheibenlagerungszusammenbau 30 in Vorwärtsrichtung über den Boden bewegt wird, sammeln sich Schmutz und Verunreinigungen an den Oberflächen der Scheiben 34 und zwischen den Scheiben 34 an. Der Schmutz und die Verunreinigungen müssen entfernt werden, um gute Bodenbearbeitungscharakteristiken und eine Zerkleinerung des Unrats zu gewährleisten.

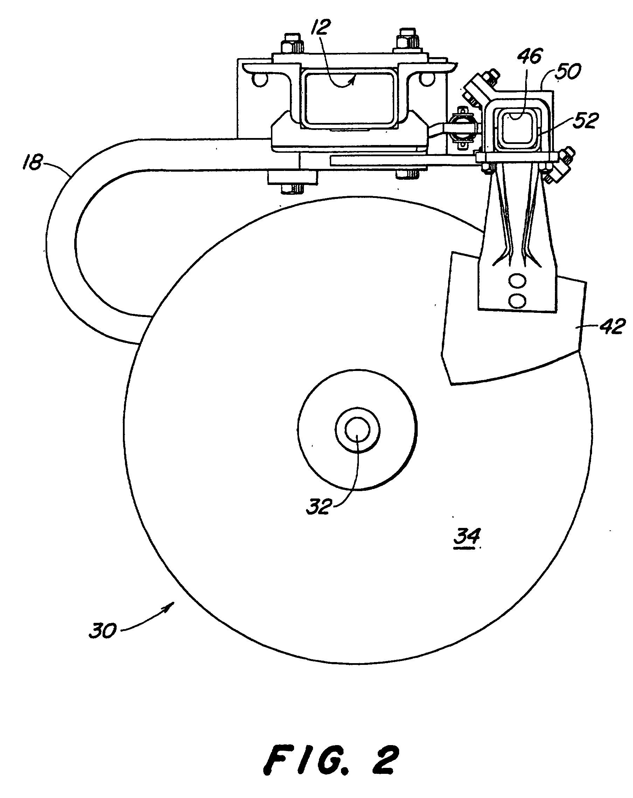

Um Schmutz und Verunreinigungen zu entfernen, ist ein Abstreifersystem, das insgesamt mit 40 gekennzeichnet ist, am Rahmen 12 aufgehängt. Es umfasst Abstreifer 42, die in Richtung auf die konkave Oberfläche der Scheiben 34 in der Nähe des Außenumfangs der Scheiben 34 zu vorspringen. Jeder Abstreifer 42 ist durch einen Zusammenbau 44 mit einer U-förmigen Schraube oder eine andere konventionelle Befestigungsstruktur mit einem rohrförmigen Element 46 verbunden. Das rohrförmige Element 46 ist verschiebbar in einem Paar seitlich beabstandeter, nach hinten vorspringender Trägerklammern 48 aufgenommen, die an ihren vorderen Enden mit dem Rahmen 12 verbunden sind. Die Trägerklammern 48 umfassen einen hinteren Winkelabschnitt 50, der an dem Rest der Trägerklammer 48 angeschraubt ist, und eine Lagerung 52 (Figur 2) zur Verminderung der Reibung und Abnutzung zwischen dem Element 46 und der Trägerklammer 48. Die Abstreifer 42 sind am rohrförmigen Element 46 mit gleichförmigen seitlichen Abständen befestigt, wobei die Abstände im wesentlichen gleich mit den Abständen zwischen den Scheiben 34 sind. Der Zusammenbau 44 kann dann angebracht werden, indem zuerst der Winkelabschnitt 50 aus der gezeigten Stellung herausgedreht wird, dann das rohrförmige Element 46 auf den Trägerklammern 48 positioniert wird, und schließlich die Winkelabschnitte 50 wieder angebracht werden. Die Trägerklammern 48 und die Lagerungen 52 stützen das rohrförmige Element 46 verschieblich ab und unterbinden eine Drehung des Elements 46 um seine Längsachse, welche sich unter normalen Betriebsbedingungen im wesentlichen parallel zur Längsachse der Achse 32 erstreckt.

Ein als kleiner doppelt wirkender Hydraulikzylinder 60 dargestellter Motor umfasst ein mit dem Rahmen 12 durch eine Klammer 62 verbundenes Basisende und ein Stabende, das durch eine Klammer 66 mit dem rohrförmigen Element 46 verbunden ist. Der im wesentlichen parallel zum rohrförmigen Element 46 orientierte Hydraulikzylinder 60 verschiebt beim Ausstrecken und Zusammenziehen das Element 46 in Längsrichtung in den Klammern 48.

Eine einstellbare Motor- oder Zylindersteuerung 70 (Figur 4) ist für den Benutzer bequem erreichbar angebracht und zwischen einer Quelle für Hydraulikflüssigkeit am ziehenden Fahrzeug und dem Hydraulikzylinder 60 angeschlossen. Eine vom einstellbaren Steuerventil (scv, selective control valve) des Traktors kommende versorgungsseitige Hydraulikleitung 72 versorgt ein einstellbares Druckregelventil 74, welches wiederum über die Leitung 76 einen einstellbaren Druck am Basisende des Hydraulikzylinders 60 bereitstellt, der bedingt, dass sich der Hydraulikzylinder 60 ausdehnt und die Abstreifer 42 in eine abstreifende Position relativ zu den Scheiben 34 vorspannt.

Wenn die abstreifende Position erreicht ist, wird das Zylindersteuerventil 70 einen konstanten Druck im Hydraulikzylinder 60 aufrechterhalten. Dadurch wird den Abstreifern 42 ermöglicht, sich seitlich mit den Scheiben 34 zu bewegen und es wird ein konstanter Druck zwischen Abstreifern 42 und Scheiben 34 aufrechterhalten. Durch das Einstellen eines Druckeinstellknopfs 78 am Druckregelventil 74 kann der Bediener die Vorspannung bequem ändern, um sie den Feldbedingungen anzupassen. Das Stabende des Hydraulikzylinders 60 ist über eine Leitung 80, das Druckregelventil 74 und die Rücklaufleitung 82 über das einstellbare Steuerventil (scv) an einem Reservoir angeschlossen. Zusätzliche Hydraulikzylinder 60' sind mit dem Hydraulikzylinder 60 parallel geschaltet, um weitere Abstreifersysteme 40 zu steuern. Ein Druckmesser 84 stellt dem die Vorspannung der Abstreifer 42 einstellenden Bediener eine sichtbare Anzeige bereit. Durch eine Umkehrung des Drucks im einstellbaren Steuerventil (scv) oder durch das Verbringen des einstellbaren Steuerventils in die Fließposition werden sich die Abstreifer 42 in eine kontaktlose Position verstellen, um das Mitziehen und die Abnutzung zu vermindern, wenn kein Abstreifen der Scheiben 34 nötig ist, wie es beispielsweise beim Bearbeiten von Boden mit losen, trockenen Bedingungen der Fall ist. Wenn danach das einstellbare Steuerventil (scv) in die Anschlagsposition verbracht wird, um die Leitung 76 unter Druck zu setzen, dehnt sich der Hydraulikzylinder 60 wieder aus, um das rohrförmige Element 46 in die Abstreifposition zu verbringen, wobei die Vorspannung des Abstreifers 42 durch die Einstellung des Knopfes 78 festgelegt wird. Wenn der Scheibenlagerungszusammenbau 30 sich relativ zum Rahmen 12 verkippt, halten der Hydraulikzylinder 60 und die Steuerung 70 eine im wesentlichen konstante Vorspannung aufrecht, wobei das rohrförmige Element 46 nach Bedarf verschoben wird. Wenn der Druck des Abstreifers 42 anfängt, den eingestellten Wert zu überschreiten, ermöglicht das Druckregelventil 74 dem Hydraulikzylinder 60, sich einzuziehen, so dass das rohrförmige Element 46 (bezüglich Figur 1) nach links gleitet. Wenn der Druck des Abstreifers 42 anfängt, sich zu vermindern, dehnt das Druckregelventil 74 den Hydraulikzylinder 60 aus, bis der Druck den ausgewählten Wert erreicht. Das Druckregelventil 74 kann für den Bediener leicht zugänglich angebracht werden, um beim Betrieb eine Verstellung der Einstellung des konstanten Drucks des Abstreifers 42 zu erleichtern, um den Druck des Abstreifers 42 sich ändernden Feldbedingungen anzupassen. Alternativ kann ein geändertes Druckregelventil 74 am Arbeitsgerät angebracht und von der Kabine des Traktors aus zur Einstellung während des Arbeitsvorgangs elektronisch gesteuert werden.

## Patentansprüche

1. Landwirtschaftliches Arbeitsgerät mit wenigstens einer drehbaren, relativ zu einem Rahmen (12) des Arbeitsgeräts sowohl in seitlicher als auch in vertikaler Richtung beweglich gelagerten Scheibe (34) zum Bearbeiten des Erdbodens und/oder zum Zerkleinern von Unrat, einem Abstreifer (42), der mittels eines Motors verschiebbar und durch den Motor gegen die Scheibe (34) vorspannbar ist, um Bodenreste und/oder Unrat von der Scheibe (34) abzustreifen, und einer einstellbaren Steuerung des Motors, mit der die Vorspannung des Abstreifers (42) gegenüber der Scheibe (34) einstellbar ist.

2. Arbeitsgerät nach Anspruch 1, wobei mehrere Scheiben (34) an einem Rahmen (12) drehbar gelagert sind, denen jeweils ein Abstreifer (42) zugeordnet ist, wobei ein Motor mit mehreren Abstreifern (42) zusammenwirkt.

3. Arbeitsgerät nach Anspruch 1 oder 2, wobei der Abstreifer (42) mit einem Träger verbunden ist, der verschiebbar an einem Rahmen (12) gelagert ist, und der Motor eingerichtet ist, den Träger zu verschieben.

4. Arbeitsgerät nach Anspruch 3, wobei der Träger ein rohrförmiges Element (46) und eine mit dem Rahmen (12) verbundene Klammer (48) umfasst, in der das rohrförmige Element (46) verschiebbar gelagert ist, und wobei der Motor zwischen Rahmen und dem Element (46) angeordnet ist.

5. Arbeitsgerät nach einem der vorhergehenden Ansprüche, der Abstreifer (42) in einer parallel zur Drehachse der Scheibe (34) verlaufenden Richtung verschiebbar ist.

6. Arbeitsgerät nach einem der vorhergehenden Ansprüche, wobei die Steuerung des Motors fernsteuerbar ist.

7. Arbeitsgerät nach einem der vorhergehenden Ansprüche, wobei der Motor hydraulisch betrieben wird, und die Steuerung des Motors eine hydraulische Drucksteuerung, insbesondere ein Druckregelventil (74) mit einstellbarem, konstantem Druck, umfasst.

8. Arbeitsgerät nach Anspruch 7, wobei der Motor einen Hydraulikzylinder (60) aufweist.

9. Arbeitsgerät nach einem der Ansprüche 7 oder 8, wobei die Steuerung des Motors einen konstanten Druck bereitstellt, um den Abstreifer (42) in eine Richtung zu bewegen, in der er gegen die Scheibe (34) vorgespannt ist, wobei der konstante Druck durch die einstellbare Drucksteuerung einstellbar ist, und der Motor eine wesentlichen konstante räumliche Beziehung des Abstreifers (42) zur Scheibe (34) bereitstellt, wenn sich die Scheibe (34) relativ zum Rahmen (12) des Arbeitsgeräts bewegt.

10. Arbeitsgerät nach einem der vorhergehenden Ansprüche, wobei ein gefedertes Trägerelement eine begrenzte Bewegung der Scheiben (34) bei Änderungen von Bodenbedingungen und der Form des Bodens relativ zum Rahmen (12) ermöglicht.

## Claims

1. Agricultural implement having at least one rotatable disc (34) for cultivating the soil and/or for comminuting refuse, which disc is mounted movably both in the lateral and in the vertical direction relative to a frame (12) of the implement, having a scraper (42) which can be displaced by means of a motor and can be pretensioned by the motor against the disc (34) in order to scrape soil residues and/or refuse from the disc (34) and having an adjustable control of the motor, with which the pretension of the scraper (42) relative to the disc (34) can be adjusted.

2. Implement according to claim 1, wherein a plurality of discs (34) is rotatably mounted on a frame (12), to which respectively one scraper (42) is assigned, one motor cooperating with a plurality of scrapers (42).

3. Implement according to claim 1 or 2, wherein the scraper (42) is connected to a carrier which is mounted displaceably on a frame (12) and the motor is fitted in order to displace the carrier.

4. Implement according to claim 3, wherein the carrier comprises a pipe-shaped element (46) and a clamp (48) connected to the frame (12), in which clamp the pipe-shaped element (46) is displaceably mounted, and wherein the motor is disposed between the frame and the element (46).

5. Implement according to one of the preceding claims, wherein the scraper (42) is displaceable in a direction which extends parallel to the axis of rotation of the disc (34).

6. Implement according to one of the preceding claims, wherein the control of the motor is able to be remotely controlled.

7. Implement according to one of the preceding claims, wherein the motor is hydraulically operated, and the control of the motor comprises a hydraulic pressure control, in particular a pressure control valve (74) with an adjustable, constant pressure.

8. Implement according to claim 7, wherein the motor has a hydraulic cylinder (60).

9. Implement according to one of the claims 7 or 8, wherein the control of the motor provides a constant pressure in order to move the scraper (42) in a direction in which it is pretensioned against the disc (34), wherein the constant pressure is adjustable by means of the adjustable pressure control, and the motor provides a substantially constant spatial relationship of the scraper (42) to the disc (34), when the disc (34) moves relative to the frame (12) of the implement.

10. Implement according to one of the preceding claims, wherein a resilient carrier element makes possible a delimited movement of the discs (34) in the case of changes in the soil conditions and in the contour of the ground relative to the frame (12).

## Revendications

1. Outil de travail agricole comportant au moins un disque rotatif (34), qui est monté de manière à être déplaçable par rapport à un cadre (12) de l'outil de travail et aussi bien dans une direction latérale que dans une direction verticale et servant à travailler le sol et/ou fragmenter des déchets, une racle (42), qui peut être entraînée au moyen d'un moteur et peut être précontrainte par le moteur contre le disque (34) de manière à éliminer par raclage les restes du sol et/ou des déchets, du disque (34), et une unité de commande réglable du moteur, au moyen de laquelle la précontrainte de la racle (42) par rapport au disque (34) est réglable.

2. Outil de travail selon la revendication 1, dans lequel plusieurs disques (34) sont montés de manière à pouvoir tourner sur un cadre (12), disques auxquels est associé respectivement une racle (42), un moteur coopérant avec plusieurs racles (42).

3. Outil de travail selon la revendication 1 ou 2, dans lequel la racle (42) est reliée à un support, qui est monté de manière à être déplaçable sur un cadre (12) et que le moteur est agencé de manière à déplacer le support.

4. Outil de travail selon la revendication 3, dans lequel le support comprend un élément de forme tubulaire (46) et une pince (48) reliée au cadre (12) et dans lequel l'élément de forme tubulaire (46) est monté de manière à être translatable, et dans lequel le moteur est disposé entre le cadre et l'élément (46).

5. Outil de travail selon l'une des revendications précédentes, dans lequel la racle (42) est translatable dans une direction parallèle à l'axe de rotation du disque (34).

6. Outil de travail selon l'une des revendications précédentes, dans lequel l'unité de commande du moteur est télécommandable.

7. Outil de travail selon l'une des revendications précédentes, dans lequel le moteur fonctionne par voie hydraulique, et la commande du moteur comprend une unité de commande de pression hydraulique, notamment une soupape de régulation de pression (74) possédant une pression constante réglable.

8. Outil de travail selon la revendication 7, dans lequel le moteur comporte un vérin hydraulique (60).

9. Outil de travail selon l'une des revendications 7 ou 8, dans lequel l'unité de commande du moteur délivre une pression constante afin de déplacer la racle (42) dans une direction, dans laquelle elle est précontrainte contre le disque (34), la pression constante étant réglable au moyen de l'unité de commande de pression réglable, et dans lequel le moteur établit une relation spatiale essentiellement constante entre la racle (42) et le disque (34), lorsque le disque (34) se déplace par rapport au cadre (12) de l'outil de travail.

10. Outil de travail selon l'une des revendications précédentes, dans lequel un élément de support suspendu élastiquement permet un déplacement limité des disques (34) par rapport au cadre (12) dans le cas de changements des conditions du sol et de la forme du sol.
